# EUROPEAN PATENT APPLICATION

(11) **EP 4 644 488 A1**
(43) Date of publication of application: **05.11.2025**
(21) Application number: 23912293.0
(22) Date of filing: 28.12.2023
(51) Int. Cl.: C08L 95/00, C08K 3/01, C08L 11/00

(54) **ASPHALT COMPOSITION AND PRODUCTION METHOD THEREFOR**

(30) Priority: 28.12.2022 JP 2022211905
(71) Applicant: Resonac Corporation, Tokyo 105-7325 (JP)
(72) Inventor: OHGUMA, Yuya, Tokyo 105-7325 (JP); SHIBUYA, Akira, Tokyo 105-7325 (JP); OGAWA, Noriko, Tokyo 105-7325 (JP)
(74) Representative: Strehl & Partner mbB
(86) International application number: PCT/JP2023/047155
(87) International publication number: WO 2024/143516

(57) **Abstract**

[Problem to be Solved]

A composition for asphalt for road paving, having improved oil resistance and a production method thereof are provided.

[Solution]

An asphalt composition, containing asphalt and a chloroprene-based polymer, wherein a content of the chloroprene-based polymer is 5 parts by mass or more and 20 parts by mass or less based on 100 parts by mass of asphalt solid content, and a tetrahydrofuran insoluble content of the chloroprene-based polymer is 20% by mass or more and 90% by mass or less.

A method for producing an asphalt composition, including mixing an asphalt emulsion and a chloroprene latex so that the chloroprene latex is 5 parts by mass to 20 parts by mass based on 100 parts by mass of asphalt solid content in the asphalt emulsion in terms of solid content, wherein a tetrahydrofuran insoluble content of the chloroprene-based polymer is 20% by mass or more and 90% by mass or less.

## Description

### Technical Field

The present invention relates to an asphalt composition with excellent oil resistance and a method for producing the same.

### Background Art

Asphalt used for road paving is composed of hydrocarbon-based components, and therefore softens when it comes into contact with engine oil or fuel leaked from vehicles traveling on a road. When a vehicle passes over the softened pavement, the pavement peels off in that area, leaving holes called potholes, which can impede vehicle travel. For this reason, there has been a demand for asphalt to have improved oil resistance in order to improve durability of pavements.

If oil resistance can be imparted by adding chloroprene which has excellent oil resistance, to asphalt, the durability of pavements is expected to be improved.

For asphalt for road paving, a polymer has been used to modify asphalt for the purposes of imparting elasticity at medium to high temperatures and resistance to embrittlement at low temperatures.

For example, Patent Literature 1 discloses imparting oil resistance to asphalt by modifying heated asphalt with a polyamide.

Patent Literature 2 discloses modification of an asphalt emulsion with a chloroprene latex.

### Citation List

### Patent Literature

[Patent Literature 1] JP4580457A
[Patent Literature 2] JP5897522A

### Summary of Invention

### Technical Problem

However, the method of Patent Literature 1 has a problem in that the energy cost is high because the heated asphalt needs to be heated for a long time to mix the asphalt and the polymer uniformly when modified with the polymer.

Also, the method of Patent Literature 2 aims to impart elongation to the asphalt emulsion, but suggests no oil resistance.

Thus, a composition with improved oil resistance has been desired for asphalt for road paving.

### Solution to Problem

The present inventors have therefore found that using a specific amount of chloroprene-based polymer latex together with asphalt can provide an asphalt composition that has excellent oil resistance and is suitable for paving. The present inventors have also found that modification thereof using a specific method at room temperature makes it possible to keep energy costs low and have thus completed the present invention.
[1] An asphalt composition, comprising asphalt and a chloroprene-based polymer,
   wherein a content of the chloroprene-based polymer is 5 parts by mass or more and 20 parts by mass or less based on 100 parts by mass of asphalt solid content, and a tetrahydrofuran insoluble content of the chloroprene-based polymer is 20% by mass or more and 90% by mass or less.
[2] A method for producing an asphalt composition, comprising mixing an asphalt emulsion with a chloroprene latex comprising a chloroprene-based polymer wherein a tetrahydrofuran insoluble content of the chloroprene-based polymer is 20% by mass or more and 90% by mass or less, so that an amount of the chloroprene latex mixed is such that the chloroprene-based polymer is 5 parts by mass or more and 20 parts by mass or less based on 100 parts by mass of asphalt solid content in the asphalt emulsion in terms of solid content.
[3] A method for producing an asphalt composition, comprising mixing, with molten asphalt, a surfactant aqueous solution and a chloroprene latex which have been mixed at 5 to 40°C, wherein the chloroprene latex comprises a chloroprene-based polymer and a tetrahydrofuran insoluble content of the chloroprene-based polymer is 20% by mass or more and 90% by mass or less,
   so that the chloroprene latex is 5 parts by mass or more and 20 parts by mass or less based on 100 parts by mass of asphalt solid content in terms of solid content, and emulsifying the mixture with a colloid mill.
[4] The method for producing the composition according to [2], wherein the asphalt emulsion and the chloroprene latex are mixed at 5 to 40°C.
[5] The method for producing the composition according to [2] or [3], wherein the chloroprene latex used is in a stable emulsion state at a pH of 2 to 4.
[6] A method for producing a mixture, comprising a step of mixing a composition produced by the production method according to [2] or [3] with an aggregate.
[7] A method for producing an asphalt pavement, comprising a step of spreading and drying a composition produced by the production method according to [2] or [3].
[8] A method for producing an asphalt pavement, comprising pouring a mixture produced by the production method according to [6].
[9] A mixture comprising the composition according to [1] and an aggregate.
[10] An asphalt pavement obtained by spreading and drying the composition according to [1].
[11] An asphalt pavement obtained by pouring the mixture according to [9].

### Advantageous Effects of Invention

Use of the composition of the present invention for paving imparts oil resistance to its asphalt surface for construction. This allows for paving with improved durability.

### Description of Embodiments

Embodiments to carry out the present invention will be described.

The present embodiment is composed of an asphalt composition, a method for producing the asphalt composition, and uses of the composition.

### Asphalt composition

The present embodiment is an asphalt composition containing asphalt and a chloroprene-based polymer, wherein the chloroprene-based polymer is in an amount of 5 parts by mass or more and 20 parts by mass or less based on 100 parts by mass of asphalt solid content, and a tetrahydrofuran insoluble content of the chloroprene-based polymer is 20% by mass or more and 90% by mass or less.

The chloroprene-based copolymer is preferably in an amount of 5 parts by mass or more and 20 parts by mass or less, more preferably 7 parts by mass or more and 15 parts by mass or less based on 100 parts by mass of asphalt solid content. With the amount of the chloroprene-based copolymer within this range, an asphalt composition with high oil resistance can be obtained.

The composition contains a dispersion medium, if necessary, specific examples thereof include water, alcohol, and the like, the amount thereof is not particularly limited as long as it is an amount that allows for facilitation of storage, transportation, application, or the like, but is preferably 10 to 500 parts by mass based on 100 parts by mass of solid content in the composition (total amount of the asphalt and chloroprene-based polymer).

The dispersion medium may be a medium used in the chloroprene latex and asphalt emulsion.

### <Asphalt>

The asphalt for use is not particularly limited, but examples of the asphalt for use include bituminous materials such as straight asphalt, blown asphalt, semi-blown asphalt, natural asphalt, modified asphalt, solvent deasphalted asphalt, tar and pitch, and heavy oils A, B, and C, and the like. These are usually used as emulsions (asphalt emulsions) by dispersing them in the presence of a dispersant using water as a dispersion medium. The dispersant is not particularly limited, and cationic and anionic dispersants can be used, with the cationic dispersants being more preferred.

Specific examples of the cationic dispersants include mixtures of amines and acids. Examples of the amines include primary amines, secondary amines, tertiary amines, and aliphatic diamines. Of these, amines with an alkyl group are more preferred.

Examples of the primary amines include laurylamine, myristylamine, 1-amino-3-undecanoxy-propane, cetylamine, stearylamine, oleylamine, behenylamine, and the like. Alternatively, examples of the primary amines also include a compound in which a hydroxyl group is substituted with an amino group in compounds having a hydroxyl group, such as coconut oil, soybean oil, beef tallow, and hardened beef tallow.

Examples of the tertiary amines include dimethyl laurylamine, dimethylstearylamine, dimethylmyristylamine, a compound in which a hydroxyl group is substituted with a dimethylamino group in compounds having a hydroxyl group such as coconut oil and hardened beef tallow.

Specific examples of the anionic dispersants include rosin acid soap, a sodium salt of naphthalenesulfonic acid condensate, a sodium salt of dodecylbenzenesulfonic acid, and a sodium salt of dodecylsulfuric acid.

These can also be used in combinations of two or more thereof. The amount of these dispersants used is not particularly limited. In general, addition of the dispersant in an amount of 0.2 to 0.5 parts by mass based on 100 parts by mass of solid content contained in asphalt enables dispersing the asphalt satisfactorily and sufficiently in water. A nonionic surfactant can also be used, and a compound having a polyoxyalkylene structure, which will be described later, can also be used as a dispersant.

### <Chloroprene-based polymer>

The chloroprene-based polymer may be a homopolymer of a 2-chloro-1,3-butadiene monomer (A-1) (hereinafter also referred to as "chloroprene monomer"), or may be a copolymer of the chloroprene monomer (A-1) and a monomer (A-2) copolymerizable with chloroprene.

The monomer (A-2) copolymerizable with chloroprene is not particularly limited as long as it does not impede the object of the present invention, and examples thereof include 2,3-dichloro-1,3-butadiene, 1-chloro-1,3-butadiene, butadiene, isoprene, styrene, acrylonitrile, acrylic acid and its esters, methacrylic acid and its esters, and sulfur. Among these, preferred are 2,3-dichloro-1,3-butadiene and 1-chloro-1,3-butadiene, and more preferred is 2,3-dichloro-1,3-butadiene.

The content of the monomer copolymerizable with chloroprene is preferably in a range of 0 to 20 parts by mass based on 100 parts by mass of 2-chloro-1,3-butadiene (chloroprene) (A-1).

The monomer copolymerizable with chloroprene may be used singly or in combinations of two or more thereof.

The tetrahydrofuran insoluble content of the chloroprene-based polymer is 20% by mass or more and 90% by mass or less. Preferably, it is 20% by mass or more and 80% by mass or less and more preferably 30% by mass or more and 50% by mass or less. With the tetrahydrofuran insoluble content within this range, flowability as the asphalt composition is obtained, which is preferable.

The chloroprene-based polymer is usually used as chloroprene latex. The chloroprene latex refers to latex in which a lipophilic chloroprene-based polymer is emulsified with an emulsifier and dispersed as particles in water.

A method for producing the chloroprene latex is not particularly limited, but emulsion polymerization is preferable, and aqueous emulsion polymerization is particularly preferable from the industrial viewpoint.

As the emulsifier for the emulsion polymerization, an anionic surfactant, a nonionic surfactant or a protective colloid-based emulsifier such as polyvinyl alcohol is preferred.

Specific examples of the anionic surfactants include rosin acid soap, a sodium salt of naphthalenesulfonic acid condensate, a sodium salt of dodecylbenzenesulfonic acid, a sodium salt of dodecylsulfuric acid, and the like.

Specific examples of the nonionic surfactants include a polyoxyethylene alkyl ether, sorbitan fatty acid ester, polyoxyethylene sorbitan fatty acid ester, and the like.

When the rosin acid soap is used as an emulsifier, the amount of rosin acid soap used is preferably 3 to 8 parts by mass and more preferably 3 to 5 parts by mass, based on 100 parts by mass of the total of chloroprene monomers and the monomers copolymerizable with the chloroprene monomer, in terms of rosin acid.

The amount being 3 parts by mass or more enables sufficient emulsification, highly controlling polymerization heat generation, as well as inhibiting formation of aggregates, resulting in an excellent product appearance.

Adding the dispersant such as sodium naphthalenesulfonate or formaldehyde condensate, makes it possible to inhibit the above problems even in a system emulsified with 3 parts by mass or less of the rosin acid.

As a polymerization initiator, a normal radical polymerization initiator can be used. For example, in the case of emulsion polymerization, a normal organic or inorganic peroxide such as benzoyl peroxide, potassium persulfate, or ammonium persulfate, or an azo compound such as azobisisobutyronitrile, can be used. In addition thereto, a co-catalyst such as anthraquinone sulfonate, potassium sulfite, or sodium sulfite can be used as appropriate.

In general, in production of chloroprene latex, a molecular weight regulator (chain transfer agent) can be used upon polymerization in order to obtain a copolymer with the desired molecular weight and distribution. For example, an alkyl xanthogen disulfide represented by O,O-diisopropyl dithiobis(thioformate) or an alkyl mercaptan represented by n-dodecyl mercaptan can be used, but is not limited thereto.

In general, in production of chloroprene latex, a polymerization terminator is added to stop a reaction when a predetermined polymerization rate is reached in order to obtain a polymer with the desired molecular weight and distribution. The polymerization terminator is not particularly limited and commonly used terminators such as phenothiazine, para-t-butylcatechol, hydroquinone, hydroquinone monomethyl ether, and diethylhydroxylamine, can be used.

The chloroprene latex used is preferably in a stable emulsion state at a pH of 2 to 4.

### <Compound having a polyoxyalkylene structure>

The asphalt composition of the present embodiment may contain a compound having a polyoxyalkylene structure. This compound contained enables improving film formability upon spreading the asphalt composition and fabricating a uniform coating film.

The compound having a polyoxyalkylene structure is not particularly limited as long as the above-described effects are obtained, and various compounds can be used regardless of a molecular weight, hydrophobicity, or the like.

As the compound having a polyoxyalkylene structure, for example, nonionic surfactants such as polyethylene glycol and a polyoxyalkylene alkyl ether, which have ethylene glycol as a unit structure, can be used.

Specific examples of the compounds having a polyoxyalkylene structure include, for example, polyoxyethylene lauryl ether, polyoxyethylene cetyl ether, polyoxyethylene stearyl ether, polyoxyethylene oleyl ether, polyoxyethylene alkyl ether, polyoxyethylene myristyl ether, polyoxyethylene octyldodecyl ether, polyoxyalkylene alkyl ether, polyoxyphenylenedistyrenated phenyl ether, polyoxyethylene tribenzyl phenyl ether, polyoxyethylene polyoxypropylene glycol, polyoxyalkylene alkenyl ether, polyoxyethylene nonyl phenyl ether, polyoxyethylene alkyl ether phosphate, polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan triisostearate, polyoxyethylenesorbitoltetraoleate, polyethylene glycol monolaurate, polyethylene glycol monostearate, polyethylene glycol distearate, polyethylene glycol monooleate, polyoxyethylene hydrogenated castor oil, a polyoxyethylene alkylamine, and the like.

The compound having a polyoxyalkylene structure may be used singly or in combinations of two or more thereof.

The compound having a polyoxyalkylene structure may be obtained by synthesis or may be a commercially available product. Commercially available products thereof include, for example, Emulgen 103, 104P, 106, 108, 109P, 120, 123P, 130K, 147, 150, 210P, 220, 306P, 320P, 350, 404, 408, 409PV, 420, 430, 705, 707, 709, 1108, 1118S-70, 1135S-70, 1150S-60, 2020G-HA, 2025G, LS-106, LS-110, LS-114, MS-110, A-60, A-90, B-66, and PP-290, LATEMUL PD-420, PD-430, PD-430S, PD450, SUPER SP-L10, AS-10V, AO-10V, AO-15V, TW-L120, TW-L106, TW-P120, TW-S120V, TW-S320V, TW-O120V, TW-O106V, TW-IS399C, SUPER TW-L120, 430V, 440V, 460V, MS-50, MS-60, MO-60, MS-165V, Emanone 1112, 3199V, 3299V, 3299RV, 4110, CH-25, CH-40, CH-60 (K), Amite 102, 105, 105A, 302, 320, Aminone PK-02S, L-02, Homogenol L-95 (all of listed above are manufactured by KAO Corporation), Adeka Pluronic (registered trademark) L-23, 31, 44, 61, 62, 64, 71, 72, 101, 121, TR-701, 702, 704, 913R (manufactured by ADEKA Corporation).

The compound having a polyoxyalkylene structure is preferably a compound represented by the following formula (1).
[Chem. 1]

R₁O-(CR₂R₃O)ₙ₋(CR₄R₅CR₆R₇O)ₘ-(CR₈R₉CR₁₀R₁₁CR₁₂R₁₃O)ₗ-(CR₁₄R₁₅CR₁₆R₁₇CR₁₈R₁₉CR₂₀R₂₁O)ₒ -(CR₂₂R₂₃CR₂₄R₂₅CR₂₆R₂₇CR₂₈R₂₉CR₃₀R₃₁O)ₚ-R₃₂ ... formula (1)

wherein in formula (1), R₁ is a hydrocarbon group having 6 to 20 carbon atoms, R₂ to R₃₁ are groups independently selected from the group consisting of a hydrogen atom, a methyl group, and an ethyl group, R₃₂ is a hydrogen atom or SO₃M, M above is a hydrogen atom, Na, K, NH₄, or NH(CH₂CH₂OH)₃, n, m, l, o, and p are independently integers of 0 to 50, provided that n + m + l + o + p is an integer of 3 to 50, and the order of the repeating units is not particularly limited.

In formula (1), the hydrocarbon group represented as R₁ may be linear, branched, or cyclic, and may be a saturated or unsaturated hydrocarbon group.

R₁ is preferably a hydrocarbon group having 2 to 18 carbon atoms, more preferably a hydrocarbon group having 6 to 14 carbon atoms, and still more preferably a hydrocarbon group having 6 to 11 carbon atoms. R₁ is preferably a linear hydrocarbon group.

R₂ to R₃₁ are each preferably independently a methyl group or a hydrogen atom, and more preferably a hydrogen atom.

When R₃₂ is SO₃M, M is preferably a hydrogen atom, Na, K, or NH₄ and more preferably Na or K.

n, m, l, o, and p are each independently preferably 1 to 30 (provided that n + m + l + o + p is 3 to 30), more preferably 1 to 20 (provided that n + m + l + o + p is 3 to 20), still more preferably 1 to 10 and n + l + o + p = 0 (provided that n + m + l + o + p is 3 to 10), and particularly preferably 1 to 5 and n + l + o + p = 0 (provided that n + m + l + o + p is 3 to 5).

The content of the compound having a polyoxyalkylene structure is preferably 0.1 to 5.0 parts by mass, more preferably 1.0 to 4.5 parts by mass, and still more preferably 2.0 to 4.0 parts by mass, based on 100 parts by mass of the solid content of the polychloroprene latex.

Within the above range of the content of the compound having a polyoxyalkylene structure, a stabilizing effect of a mixture is obtained, making it possible to achieve film formability upon spreading an asphalt emulsion, and to obtain a uniform coating film.

Other compounding agents can be further compounded into the asphalt composition, if necessary.

For example, inorganic fillers such as zinc oxide, calcium carbonate, and silica may be contained. When using the inorganic filler, the amount thereof may be 30% by mass or more and 45% by mass or less when the total amount of the asphalt, chloroprene-based polymer, and inorganic filler is 100% by mass.

A coagulant can also be mixed in the asphalt composition to promote solidification upon drying. The coagulant is an aqueous solution of various polyvalent metal salts, and is an auxiliary agent for reducing the dispersion stability of the asphalt emulsion and coagulating and precipitating the asphalt. The polyvalent metal salt used as the coagulant is preferably a metal salt that is easily soluble in water and has excellent coagulation performance for the asphalt composition, examples of which include calcium chloride, calcium nitrate, and alum. In the case of mixing the coagulant into the asphalt composition, when the amount of the coagulant added is such that the inorganic filler is in the range of 10 to 30 parts by mass based on the sum total of the total amount of the asphalt and the chloroprene-based polymer and the amount of the coagulant of 100 parts by mass, the asphalt composition can be solidified in a short time and the coagulant can be prevented from precipitating on the surface thereof.

### Method for producing asphalt composition

The method for producing the asphalt composition of the present embodiment is characterized by mixing an asphalt emulsion with a chloroprene latex so that an amount of the chloroprene latex mixed is such that the chloroprene polymer in the chloroprene latex is 5 parts by mass to 20 parts by mass based on 100 parts by mass of asphalt solid content in the asphalt emulsion in terms of solid content (a first method).

The mixing method is not particularly limited, and a known mixing method can be employed. The asphalt emulsion and the chloroprene latex are preferably mixed at 5 to 40°C. By mixing at this temperature, favorable mixing can be achieved.

The method for producing the asphalt composition of the present embodiment is characterized by mixing, with molten asphalt, a surfactant aqueous solution and the chloroprene latex which have been mixed at 5 to 40°C, and emulsifying the mixture with a colloid mill (a second method).

Examples of the surfactants can include those exemplified as the dispersants used in the asphalt. The concentration is adjusted to the same dispersant concentration in the asphalt emulsion as in the first method described above.

In a case in which the compound having a polyoxyalkylene structure is used as a surfactant, it is not necessary to be added upon production, but it is added upon the above mixing, if necessary.

In the production method above, energy costs when producing the asphalt composition can be kept low.

Drying the composition of the present embodiment described above allows a chloroprene-modified asphalt composition to be obtained.

### <Mixture>

The mixture of the present embodiment contains the composition and an aggregate. This mixture is called an asphalt mixed material.

The method for producing a mixture of the present embodiment includes a step of mixing the composition produced by the above production method with an aggregate.

For example, the asphalt composition is heated, melted, and then mixed with the aggregate to obtain an asphalt mixed material. Also the above asphalt composition of the present embodiment may be directly mixed with the aggregate or the like and then heated.

The aggregate is not particularly limited, and crushed stone, boulders, gravel, recycled aggregate, ceramics, and the like, can be selected and used.

A proportion of the amount of the aggregate to the total amount of the asphalt and chloroprene-based polymer, is not particularly limited. When using the aggregate, the amount thereof is preferably 85 to 97 parts by mass and more preferably 90 to 97 parts by mass based on the total amount of the asphalt, chloroprene-based polymer, and aggregate of 100 parts by mass. The aggregate may be compounded when used.

### <Asphalt pavement>

The composition of the present embodiment can be used for an asphalt pavement in which the composition can be spread on a pavement surface.
Such a pavement can be used in fog seal for spreading and seal coat in which following spreading, an aggregate is further spread, or the like. The asphalt pavement can be used for cold in place recycling (CIR) paving in which when the existing asphalt surface is removed and reused, crushed asphalt is mixed as a recycling agent and is returned to the original asphalt surface, and for on-road roadbed regeneration construction for crushing a pavement in place, simultaneously mixing an asphalt composition with the existing roadbed material, compacting and stabilizing the mixture to create a new roadbed.

It is possible to adopt a coating method including mixing the asphalt composition with an aggregate and pouring this mixture. It is further possible to adopt asphalt paving including heating, melting, and pouring an asphalt mixed material composed of a mixture. In these construction methods as well, slurry seal, cold in place recycling (CIR), on-road roadbed regeneration, and the like, are also possible.

Using the asphalt composition of the present embodiment also enables room temperature construction.
Also, the method for producing an asphalt pavement of the present embodiment includes a step of spreading and drying the composition produced by the above-described method. Furthermore, in the method for producing an asphalt pavement of the present embodiment, the mixture produced by the above-described method is poured.

### Example

Next, the present invention will be described in more detail with referring to Examples, but the present invention is not limited to these Examples.

### [Example 1]

A 5-liter glass reactor was charged with 1.92 kg of 2-chloro-1,3-butadiene (manufactured by Tokyo Chemical Industry Co., Ltd.), 60 g of methacrylic acid, 20 g of 2,3-dichloro-1,3-butadiene, 2.1 kg of pure water, 80 g of polyvinyl alcohol (trade name PVA-205, manufactured by KURARAY CO., LTD.), 12 g of n-dodecyl mercaptan (the molecular weight of which was adjusted), and 12 g of N-lauroylethanolamide (trade name Tohol N-230, manufactured by TOHO Chemical Industry Co., Ltd.), and the mixture was emulsified, and potassium persulfate (first-class product, manufactured by Wako Pure Chemical Industries, Ltd.) was added as a polymerization initiator, to carry out polymerization at 45°C under a nitrogen gas atmosphere. When the polymerization conversion of the monomers was confirmed to be 100%, an emulsion of phenothiazine was immediately added to terminate the polymerization, and to obtain chloroprene latex. Next, the unreacted monomer was removed by steam distillation. The actual solid content rate of the polychloroprene latex was 46.3% by mass. Table 1 shows the ratio of the amounts of the monomers of each component charged in terms of % by mass.

To 100 parts by mass of the synthesized chloroprene latex was added 3 parts by mass of Emulgen 1135S-70 (manufactured by Kao Corporation) as the compound having a polyoxyalkylene structure,

To 40 g of an asphalt emulsion PK-1 (manufactured by TOA RORD CORPORATION) in compliance with JIS K2208-2008, was added chloroprene latex added with a nonionic surfactant so that the amount of chloroprene added was as shown in Table 1, and the mixture was mixed well to fabricate an asphalt composition. CR in Table 1 denotes chloroprene.

40 g of the composition was weighed out into a silicon tray with a bottom of 140 mm × 180 mm, and dried under the following conditions to obtain a dried asphalt residue.

This is in accordance with the American Association of State Highway Traffic Officials (AASHTO) PP72 Edition 2011.
25°C × 24 hours and then 60°C × 24 hours

Next, approximately 1.00 ± 0.05 g of the dried asphalt residue was weighed out into a silicon mold with a hole of 25mm in diameter × 1.3mm in depth, heated and melted at 141°C × 15min, then cooled to room temperature (25°C) to fabricate a test specimen of 25mm in diameter.

### <Oil resistance test>

Approximately 100 mL of kerosene is taken in a 225 mL glass bottle, and the test specimen left on a wire mesh stand is immersed in the kerosene. In this case, the mass of the wire mesh stand and the mass of the wire mesh stand plus the test specimen are measured and recorded.

After an elapsed time of 1.5 hours at 25°C (room temperature) from the start of immersion, the test specimen left on the wire mesh stand was removed, kerosene adhering to the wire mesh was wiped off, and a mass of the test specimen left on the wire mesh stand is measured and recorded. The kerosene adhering to the sample is not wiped off.

A percentage of kerosene remaining after 1.5 hours was calculated using the following formula. Percentage of kerosene remaining after 1.5 hours (%) = (test specimen weight after immersion for 1.5 hours/test specimen weight before immersion) × 100

### <Tetrahydrofuran insoluble content>

The tetrahydrofuran insoluble content was calculated using the following formula. Tetrahydrofuran insoluble content (%) = {1 - (mass of the residue after evaporation (g) ÷ solid content in 1 g of polymer latex (g))} × 100 (%)
It is to be noted that the solid content in 1 g of combined latex is the mass after having dried 1 g of an emulsion at 141°C for 30 minutes.

### [Examples 2 and 3, Comparative Example 1]

Chloroprene latex and an asphalt composition were fabricated in the same manner as in Example 1, except that the amount of chloroprene monomer charged was the value as shown in Table 1, and the amount of chloroprene added to the asphalt composition was the value shown in Table 1, and then evaluated.

### [Example 4]

A 5-liter glass reactor was charged with 2.0 kg of 2-chloro-1,3-butadiene (manufactured by Tokyo Chemical Industry Co., Ltd.), 1.6 kg of pure water, 80 g of rosin acid (R-300, manufactured by Arakawa Chemical Industries Co., Ltd.), 3.6 g of n-dodecyl mercaptan (manufactured by Tokyo Chemical Industry Co., Ltd.), 20 g of 20% by mass potassium hydroxide (special grade, manufactured by Wako Pure Chemical Industries Co., Ltd.), and 16 g of a sodium salt of β-naphthalenesulfonic acid formalin condensate (manufactured by Kao Corporation), and the mixture was emulsified, and potassium persulfate (first-class product, manufactured by Wako Pure Chemical Industries, Ltd.) was added as a polymerization initiator, to carry out polymerization at 40°C for 7 hours under a nitrogen gas atmosphere. When the polymerization conversion of the monomer was confirmed to be 88%, an emulsion of phenothiazine was immediately added to terminate the polymerization, and chloroprene latex was obtained.

Next, the unreacted monomer was removed by steam distillation. The actual solid content of the polychloroprene latex was 49.2% by mass.

An asphalt composition was fabricated in the same manner as in Example 1, except for using the above chloroprene latex, and then evaluated.

### [Examples 5 to 8, Comparative Examples 2 to 6]

Chloroprene latex and an asphalt composition were fabricated in the same manner as in Example 4, except that the amount of chloroprene monomer charged and the conversion rate were the values as shown in Table 1, and the amount of chloroprene added was the value as shown in Table 1, and then evaluated.

### [Comparative Example 7]

An asphalt composition was fabricated in the same manner as in Example 1, except for not using chloroprene latex, and then evaluated.

### [Comparative Example 8]

An asphalt composition was fabricated in the same manner as in Example 2, except for using SBR (styrene butadiene rubber, NX4190, manufactured by BASF GmbH) instead of the chloroprene latex in Example 1, and then evaluated. It is noted that the column for the amount of chloroprene added in Table 1 is the amount of SBR added in Comparative Example 8.

The results are shown in Table 1

**[Table 1]**

| | | Example 1 | Example 2 | Example 3 | Example 4 | Example 5 | Example 6 | Example 7 | Example 8 |
|---|---|---|---|---|---|---|---|---|---|
| Monomer | Chloroprene (% by mass) | 96 | 96 | 97 | 100 | 100 | 99.75 | 100 | 100 |
| | 2,3-Dichloro-1,3-butadiene (% by mass) | 1 | 1 | - | - | - | - | - | - |
| | Methacrylic acid (% by mass) | 3 | 3 | 3 | - | - | - | - | - |
| | Sulfur (% by mass) | - | - | - | - | - | 0.25 | - | - |
| | n-Dodecyl mercaptan (parts by mass) | 0.6 | 0.6 | 0.26 | 0.18 | 0.18 | 0 | 0.05 | 0.05 |
| Emulsifier | Polyvinyl alcohol (parts by mass) | 4 | 4 | 4 | - | - | - | - | - |
| Conversion (%) | | 100 | 100 | 100 | 88 | 88 | 100 | 88 | 88 |
| Polymer | Polymer type | CR | CR | OR | CR | CR | CR | CR | CR |
| | Tetrahydrofuran insoluble content % | 21 | 21 | 63 | 42 | 42 | 79 | 84 | 84 |
| Composition | Amount of chloroprene added (parts by mass) | 5 | 10 | 10 | 5 | 10 | 10 | 5 | 10 |
| | Percentage of kerosene remaining after 1.5 hours (%) | 88 | 112 | 105 | 89 | 105 | 108 | 99 | 100 |

| | | | | | | | | | |
|---|---|---|---|---|---|---|---|---|---|
| *¹ In Comparative Example 8, the numeral denotes the amount of SBR added. | | | | | | | | | |

**Table 1 (continued)**

| | | Comparative Example 1 | Comparative Example 2 | Comparative Example 3 | Comparative Example 4 | Comparative Example 5 |
|---|---|---|---|---|---|---|
| Monomer | Chloroprene (% by mass) | 96 | 100 | 100 | 99.75 | 100 |
| | 2,3-Dichloro-1,3-butadiene (% by mass) | 1 | - | - | - | - |
| | Methacrylic acid (% by mass) | 3 | - | - | - | - |
| | Sulfur (% by mass) | - | - | - | 0.25 | - |
| | n-Dodecyl mercaptan (parts by mass) | 0.6 | 0.11 | 0.18 | 0 | 0.05 |
| Emulsifier | Polyvinyl alcohol (parts by mass) | 4 | - | - | - | - |
| Conversion (%) | | 100 | 77 | 88 | 100 | 88 |
| Polymer | Polymer type | CR | CR | CR | CR | CR |
| | Tetrahydrofuran insoluble content % | 21 | 3 | 42 | 79 | 84 |
| Composition | Amount of chloroprene added (parts by mass) | 2 | 10 | 2 | 2 | 2 |
| | Percentage of kerosene remaining after 1.5 hours (%) | 56 | 42 | 46 | 39 | 52 |

| | | | | | | |
|---|---|---|---|---|---|---|
| *¹ In Comparative Example 8, the numeral denotes the amount of SBR added. | | | | | | |

**Table 1 (continued)**

| | | Comparative Example 6 | Comparative Example 7 | Comparative Example 8 |
|---|---|---|---|---|
| Monomer | Chloroprene (% by mass) | 100 | - | - |
| | 2,3-Dichloro-1,3-butadiene (% by mass) | - | - | - |
| | Methacrylic acid (% by mass) | - | - | - |
| | Sulfur (% by mass) | - | - | - |
| | n-Dodecyl mercaptan (parts by mass) | 0.05 | - | - |
| Emulsifier | Polyvinyl alcohol (parts by mass) | - | - | - |
| Conversion (%) | | 88 | - | - |
| Polymer | Polymer type | CR | None | SBR |
| | Tetrahydrofuran insoluble content % | 84 | - | 38 |
| Composition | Amount of chloroprene added (parts by mass) | 3 | 0 | 10 *¹ |
| | Percentage of kerosene remaining after 1.5 hours (%) | 42 | 0 | 125 |

| | | | | |
|---|---|---|---|---|
| *¹ In Comparative Example 8, the numeral denotes the amount of SBR added. | | | | |

The asphalt compositions of Examples all had excellent oil resistance with little change in the percentage of kerosene remaining after 1.5 hours, ranging from 88% to 112%. In contrast, Comparative Examples 1 to 6, in which the tetrahydrofuran insoluble content and the amount of chloroprene added were outside the range of claim 1, and Comparative Example 7 in which no polymer was used, had a percentage of kerosene remaining after 1.5 hours of 60% or less after 1.5 hours, resulting in poor oil resistance. Comparative Example 8, in which SBR was used instead of chloroprene, had a percentage of kerosene remaining after 1.5 hours of 125%, as a result of which the composition swelled more than before the test and had poor stability.

### Industrial Applicability

The asphalt composition of the present invention can be used for asphalt pavements at airports and gas stations, requiring oil resistance for their road surfaces. Also for a general road as well, a road pavement can be provided which is less likely to develop potholes due to fuel leaks and the like.

## Claims

1. An asphalt composition, comprising asphalt and a chloroprene-based polymer,
wherein a content of the chloroprene-based polymer is 5 parts by mass or more and 20 parts by mass or less based on 100 parts by mass of asphalt solid content, and
a tetrahydrofuran insoluble content of the chloroprene-based polymer is 20% by mass or more and 90% by mass or less.

2. A method for producing an asphalt composition, comprising mixing an asphalt emulsion with a chloroprene latex comprising a chloroprene-based polymer wherein a tetrahydrofuran insoluble content of the chloroprene-based polymer is 20% by mass or more and 90% by mass or less,
so that an amount of the chloroprene latex mixed is such that the chloroprene-based polymer is 5 parts by mass or more and 20 parts by mass or less based on 100 parts by mass of asphalt solid content in the asphalt emulsion in terms of solid content.

3. A method for producing an asphalt composition, comprising mixing, with molten asphalt, a surfactant aqueous solution and a chloroprene latex which have been mixed at 5 to 40°C, wherein the chloroprene latex comprises a chloroprene-based polymer and a tetrahydrofuran insoluble content of the chloroprene-based polymer is 20% by mass or more and 90% by mass or less,
so that the chloroprene latex is 5 parts by mass or more and 20 parts by mass or less based on 100 parts by mass of asphalt solid content in terms of solid content, and emulsifying the mixture with a colloid mill.

4. The method for producing the composition according to claim 2, wherein the asphalt emulsion and the chloroprene latex are mixed at 5 to 40°C.

5. The method for producing the composition according to claim 2 or claim 3, wherein the chloroprene latex used is in a stable emulsion state at a pH of 2 to 4.

6. A method for producing a mixture, comprising a step of mixing a composition produced by the production method according to claim 2 or 3 with an aggregate.

7. A method for producing an asphalt pavement, comprising a step of spreading and drying a composition produced by the production method according to claim 2 or 3.

8. A method for producing an asphalt pavement, comprising pouring a mixture produced by the production method according to claim 6.

9. A mixture comprising the composition according to claim 1 and an aggregate.

10. An asphalt pavement obtained by spreading and drying the composition according to claim 1.

11. An asphalt pavement obtained by pouring the mixture according to claim 9.
